# EUROPEAN PATENT APPLICATION

(11) **EP 1 746 347 A2**
(43) Date of publication of application: **24.01.2007**
(21) Application number: 06252925.0
(22) Date of filing: 06.06.2006
(51) Int. Cl.: F23R 3/34, F23R 3/60, F02C 9/28

(54) **Method and system for operating a multi-stage combustor**

(30) Priority: 21.07.2005 GB 0515034
(71) Applicant: Rolls-Royce plc, London SW1E 6AT (GB)
(72) Inventor: Griffin, Ian Allan, Crookes, Sheffield S10 1WE (GB); Rowe, Arthur Laurence, Littleover, Derby DE23 6BA (GB); Stevenson, Andrew, Ashbourne, DE6 1HT (GB); Lebel, Jean-Francois, Chellaston, Derby, DE73 1PQ (GB); Mohamed, Caroline, Derby, DE22 3UL (GB); Briekin, Timofei Vitalyevich, Manchester, M32 8PN (GB); Sherwood, David James, Derby, DE23 6TH (GB)
(74) Representative: Gill, Stephen Charles

(57) **Abstract**

A method for operating a multi-stage combustor of a gas turbine engine comprises:
(a) determining a combustor air entry temperature;
(b) determining the combustor air entry flow rate; and
(c) controlling the fuel split ratio to stages of the combustor on the basis of the combustor air entry flow rate and the combustor air entry temperature.

## Description

### Field of the Invention

The present invention relates to a method and system for operating a multi-stage combustor of a gas turbine engine.

### Background of the Invention

There are a number of known methods of fuel control for staged gas turbine combustion systems. One example is shown in US 4716719. This patent discloses a fuel gas control system in which the fuel control valve is controlled by a load signal during normal operation and by a fuel flow rate signal during switches between single-stage and two-stage operation. It also discloses using a predetermined time period during which the fuel control valve is controlled by a fuel flow rate signal rather than a load signal.

A further example is described in WO 95/17632. This discloses the use of a thrust-indicative parameter to indicate the switching points from one staging regime to another. A hysteresis is employed such that the staging in of a subset of burners occurs at a higher thrust level than the staging out, thereby providing stable operation at power levels close to a nominal switching point. In a particular embodiment, the thrust level indicative parameter is a compressor exit temperature signal. In a different embodiment the thrust level indicative parameter is total fuel flow divided by compressor exit pressure. The chosen thrust indicative parameter is used to determine the fuel split ratio between pilot and active mains burners.

A further example is shown in WO 92/07221. This discloses the use of a power output of an industrial gas turbine engine as the parameter used to determine the staging regime of the engine.

The prior art documents discussed above make use of load signals or thrust indicative parameters to determine the fuelling regime of staged combustors. However, the relatively simple control systems used in the prior art mean that the staging regime may not be altered in response to small transients that do not result in a significant change in engine power level. During transient operation, the gas turbine engine changes power level by over- or under-fuelling the engine relative to the fuel requirement at the associated steady state condition. This over- and under-fuelling results in a wide range of possible flame temperatures at a given power level. Therefore, as flame temperature is the predominant factor in both engine emissions and safe combustor and turbine handling, conventional control systems can result in staging regimes that are not optimal.

For example, during acceleration the engine is over-fuelled relative to the steady state requirement at a given power level. This increases the temperature of the combustion products. Indeed, during a rapid acceleration, the gas turbine may experience local temperatures in excess of those experienced at high power. This has implications for both the emissions of the engine during this phase of operation and the life expectancy of static elements of the engine structure that are exposed to these temperatures.

On the other hand, during deceleration the engine is under-fuelled relative to the steady state requirement at a given power level. This decreases the fuel/air ratio (FAR) in the combustion chamber. The consequent reduction in flame temperature may result in an increase in CO and unburnt hydrocarbon (UHC) emissions. A more severe consequence of rapid fuel pull-off events, such as surge recovery, may involve the combustion process experiencing FAR values that pose a risk of weak extinction.

Where a control system uses a thrust-indicative parameter to determine the fuelling regime, a further problem can be that it does not allow for the fuelling regime of the engine to be adjusted for ambient conditions or engine control settings. This can cause problems, as atmospheric temperature and pressure, along with bleed valve settings, significantly affect flame temperature.

US 5743079 discloses a fuel control system for a gas turbine engine. The control system calculates the combustion airflow and proposes the use of this to set the fuel demand signals for the fuel metering units of primary, secondary and tertiary combustion stages.

### Summary of the Invention

The present invention is at least partly based on the realisation that, by using the combustor air entry flow rate and the combustor air entry temperature as control parameters, better control of emissions from the combustor can be exercised while at the same time stability margins during steady state and transient operations can be maintained over a wide range of operating conditions.

Thus a first aspect of the invention provides a method for operating a multi-stage combustor of a gas turbine engine, the method comprising:
(a) determining a combustor air entry temperature;
(b) determining the combustor air entry flow rate; and
(c) controlling the fuel split ratio to stages of the combustor on the basis of the combustor air entry flow rate and the combustor air entry temperature.

The combustor inlet temperature can be measured directly. Alternatively it can be calculated from other engine operational parameters, such as the compressor air delivery pressure, the engine inlet pressure and temperature, and a known compression efficiency. The skilled person is familiar with such calculations.

Conveniently, the combustor air entry flow rate is calculated using a procedure identical or similar to that disclosed in US 5743079, although it can be determined by other approaches known to the skilled person such as a heat balance method or a compressor flow capacity method. However, these methods are less preferred as they are further removed from the combustor and sensitive to bleed assumptions or deterioration.

Typically, in step (b), the combustor air entry flow rate is calculated from at least the following parameters:
the combustor air entry temperature;
the compressor air delivery pressure; and
the total fuel flow rate.

The total fuel flow rate is readily measurable, and the other two parameters can be obtained by measurement or by estimation from other engine operational parameters.

The specific humidity may also be used in the calculation of the combustor air entry flow rate. The specific humidity is readily measurable for industrial gas turbines and also for aero gas turbines (although less conveniently), and can be used to improve the accuracy of the calculations.

Furthermore, one or both of the following parameters may also used in the calculation of the combustor air entry flow rate:
the high pressure compressor rotational speed; and
the engine air inlet pressure.

Preferably, the method further comprises the step of deriving the FAR for the combustor on the basis of the combustor air entry flow rate, whereby, in step (c), the fuel split ratio to stages of the combustor is controlled on the basis of the FAR thus-derived and the combustor air entry temperature.

For example, the FAR may be derived from the total fuel flow rate and the combustor air entry flow rate.

Preferably step (c) comprises:
equating the FAR and the combustor air entry temperature to a combustor flame temperature; and
controlling the fuel split ratio on the basis of the combustor flame temperature.

A reason for the improvements in combustor performance that can be obtained with the method of this aspect of the invention is that the combustor air entry flow rate (preferably in the form of the FAR) and the combustor air entry temperature can be directly related to physical processes within the combustor. For example, these processes can be represented by a combustor flame temperature. This temperature can be obtained from the FAR and the combustor air entry temperature e.g. analytically or using a look-up table.

Excessive flame temperatures during over-fuelling can be alleviated by staging in unused burners to distribute fuel more evenly around the combustor. Likewise, excessively low FAR values during under-fuelling can be alleviated by staging out burners in order to concentrate the fuel more densely within local areas of the combustion chamber. Linking such staging events to specific combustor flame temperatures is an effective way of running of the engine to (i) reduce emissions, (ii) avoid the overheating of static elements (in the case of over-fuelling) and (iii) reduce the risk of weak extinction (in the case of under-fuelling).

Thus, preferably, step (c) further comprises triggering a staging event when the combustor flame temperature reaches a threshold value.

The method of this aspect of the invention can be applied to many types of multi-stage combustor, but preferably the combustor has concentric stages. Typically, concentric stage combustors do not produce distinct boundaries between the respective combustion zones. Thus combustion can be characterised by a single combustor flame temperature.

In a second aspect, the present invention also provides a computer system for operating a multi-stage combustor of a gas turbine, which system is configured to perform the method of the previous aspect.

For example, the computer system can be configured to:
(a) receive or calculate a combustor air entry temperature;
(b) calculate the combustor air entry flow rate; and
(c) control the fuel split ratio to stages of the combustor on the basis of the combustor air entry flow rate and the combustor air entry temperature.

Thus the system of this aspect of the invention corresponds to the method of the first aspect, and optional features of the first aspect described herein pertain also to the system of the present aspect.

A further related aspect of the invention provides a computer program which, when run on a suitable computer system, can operate a multi-stage combustor of a gas turbine engine according to the method of the first aspect.

A still further aspect of the invention provides a computer program product carrying the program of the previous aspect.

Another aspect of the invention provides a gas turbine engine having a multi-stage combustor and a computer system according to the second aspect for operating the combustor. The combustor may have concentric stages.

### Brief Description of the Drawings

Embodiments of the invention will now be described by way of example with reference to the accompanying drawings in which:
Figure 1 is a flow diagram by which the air entry mass flow rate for the combustor of a gas turbine engine is determined;
Figure 2 is a flow diagram for a method of controlling the fuel split to stages of a combustor;
Figure 3 is a flow diagram for a more elaborate method of controlling the fuel split to stages of a combustor;
Figure 4 is a flow diagram for a procedure for determining the staging regime of a manifold of a combustor;
Figure 5 is a graph of combustor air entry temperature (T30) against FAR and shows the positions of lines of constant flame temperature and a steady state engine operating curve; and
Figure 6 is a flow diagram for a procedure for determining the split ratio of fuel between active sets of burners.

### Detailed Description

A typical gas turbine engine comprises, in axial flow series, a low pressure (LP) compressor, a high pressure (HP) compressor, a combustor, an HP turbine, an LP turbine, and an exhaust. The LP and HP turbines drive the corresponding compressors through concentric shafts within the engine, each assembly of a turbine and a shaft joined together by shaft being termed a "spool". Single spool and triple spool gas turbine engines are also used. Nozzle guide vanes (NGVs), situated immediately in front of the HP turbine, receive the hot gases released by the combustor.

The combustor of a gas turbine engine can take many forms. US 5743079 describes a combustor for an industrial gas turbine which has nine separate combustion chambers disposed within separate casings of generally cylindrical form. The casings project generally radially outwards of the rest of the engine and are equiangularly spaced around the engines's longitudinal axis. Each combustion chamber has a combustor head at the radially outer end of the respective casing, the heads receiving fuel feeds and electrical power. Each combustion chamber includes an igniter in its head, followed in flow series by primary, secondary and tertiary combustion stages respectively. The tertiary stage transitions to a discharge nozzle which is turned from the radial to the downstream axial direction so that the combustion gases are discharged directly into the HP turbine, past the NGVs to which the discharge nozzles are secured.

US 6381947, on the other hand, discloses a staged annular combustion chamber in which an annular dividing wall divides a radially inner pilot combustion chamber from a radially outer main combustion chamber. Each of the chambers has a ring of fuel nozzles through which fuel or air-fuel mixture is introduced into the chamber. At low loads only the pilot nozzles are operated, but as the load increases a staging event brings in the main nozzles. Further load increases lead to augmentation of the mains/pilot fuel split ratio.

US 6272840 discloses a gas turbine fuel injection system in which a pilot fuel injector is surrounded by a concentric main fuel injector. Like US 6381947, at low loads only the pilot fuel injector is operated, but as the load increases a staging event brings in the main fuel injector.

Thus, despite their different configurations, each of these combustors/injection systems have in common that they are multi-stage, such that in operation one or more staging events may occur, and the fuel split between stages can vary.

US 5743079 discloses an algorithm by which the air entry mass flow rate for the combustor of a gas turbine engine is determined. As mentioned above, the exemplified engine in US 5743079 is an industrial gas turbine engine with radial combustion chambers and stages spaced along the length of each chmaber, but the algorithm can be applied equally to, say, an aero gas turbine engine with an annular combustor and concentric stages.

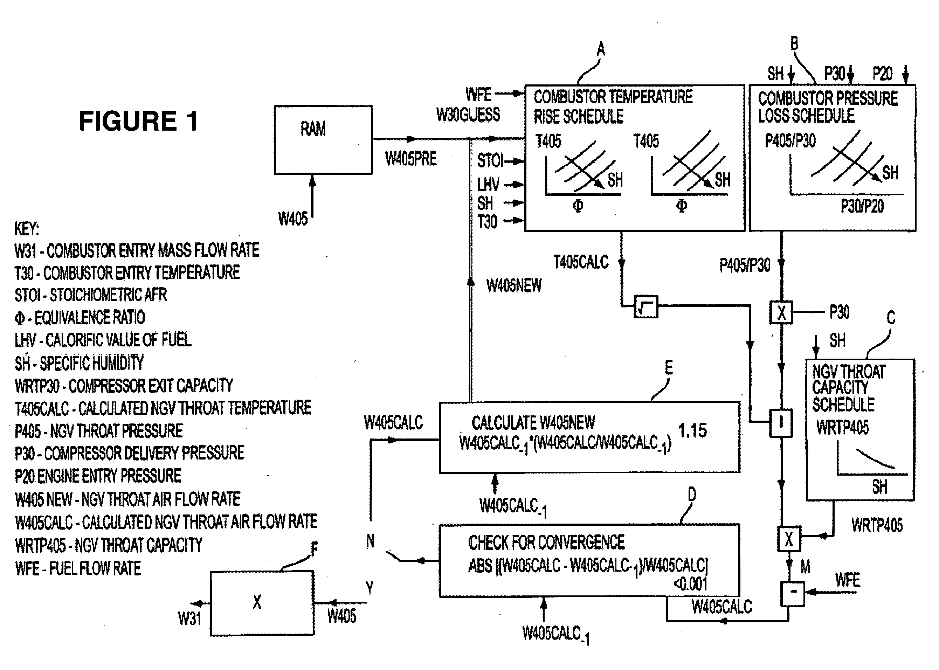

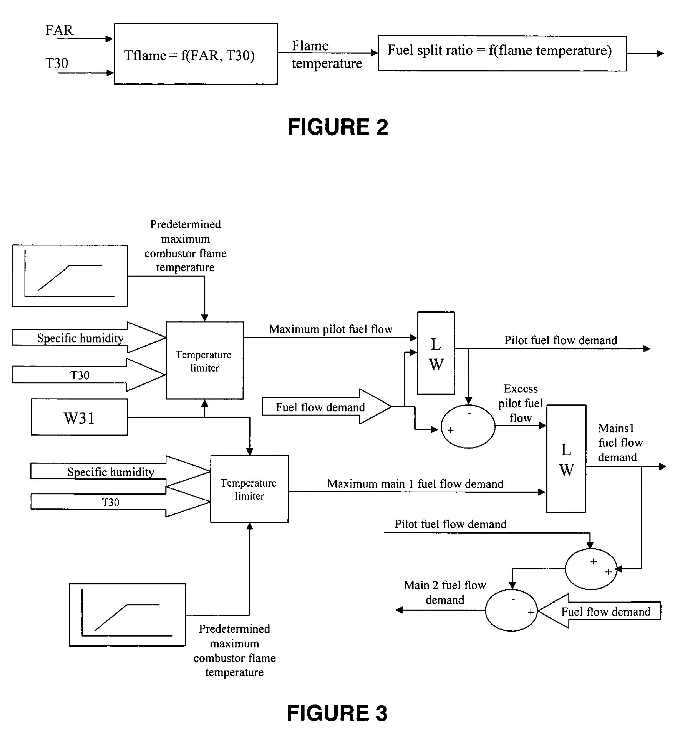

Figure 1 (which reproduces Figure 3 of US 5743079) is a flow diagram for the algorithm. In general terms the algorithm implements an iterative procedure which allows the combustor entry mass flow rate W31, to be calculated at successive time steps during the operation of the combustor. The algorithm uses the fact that the HP turbine NGVs are choked throughout the normal operating range. Thus the algorithm is relatively inaccurate at sub-idle power levels, but as fuel is generally not split at such low power levels, this is not a significant problem.

The algorithm is part of a control system for operating a multi-stage combustor. The system can be implemented as a digital electronic controller which executes software embodying the necessary control functions. The code comprising the software must be executed within a predefined recursion period determined by the interrupt frequency of the CPU, the desired rate of response of the engine to control inputs, the number of input variables which must be sampled by the controller, and the time taken by the controller to execute the software code. For example, the recursion period may be 10 milliseconds.

Fuel of known calorific value LHV, having a stoichiometric air/fuel ratio STOI, and an equivalence ratio Φ, is supplied to the combustor, and this information is used by the algorithm. The algorithm also uses values of the engine inlet pressure P20, HP compressor exit pressure P30, HP compressor exit temperature T30 (which is essentially the same thing as the combustor air entry temperature), fuel flow rate WFE, specific humidity SH, and the value of W31 from the previous recursion (termed W30GUESS in Figure 1). These will generally be measured and supplied to the algorithm in real time. However, if a value for SH is not available, the algorithm can proceed on an assumed value (e.g. 1%) with only a minor loss in accuracy.

The internal task of the algorithm is to calculate a value of W405, the mass flow rate of air in the throat of the nozzle formed by the ring of NGVs. From this, a value of W31 can be readily obtained.

To begin the process of calculation, a value W405PRE is input to the algorithm. This is a value of W405 previously calculated and verified by the algorithm during the previous recursion period of the controller. Variables used in the calculation, whether sampled sensor values, calculated variables, or output variables, are retained in the controller's memory until the next recursion period. Thus, at the end of each recursion period of the controller, the current calculated value of W405, is retained in RAM as W405PRE, displacing the previously derived value of W405PRE. At switch-on of the control system, it may be arranged that the RAM is initialised with a preset value from the software which the algorithm uses to arrive at a first verified value for W405.

Along with other variables already mentioned, W405PRE is input to the first of three schedules A, B and C whose outputs are combined to give an estimate of M, the mass flow rate of the combustion gases. The three schedules are:
A - Combustor Temperature Rise Schedule
B - Combustor Pressure Loss Schedule
C - NGV Throat Capacity Schedule.

After deduction from M of the total mass flow rate WFE of fuel to the combustor, the remainder is W405CALC, a calculated value of W405. Using a subroutine D, the algorithm then checks the value of W405CALC for convergence with the true value of W405 in accordance with a predetermined criterion.

If the test for convergence is passed, the value W405CALC may be accepted as the true value of W405 and, after factoring in subroutine F to remove the contribution of the mass flow rate of the cooling air, may be output from the algorithm as a true value of W31.

If the test for convergence in D is not passed, or if it is desired to further refine an already acceptable value, W405CALC is input to a further subroutine E where it is subjected to a simple mathematical procedure before being reinput to Schedule A as W405NEW for a further iteration of the algorithm.

In any event, having determined W31, the control system can combine this with the present value for WFE to derive the present FAR (=WFE/W31). The system can then use this FAR and the present value for T30 to control the fuel split to stages of the combustor.

Further details of the operation of the algorithm can be obtained from US 5743079.

The algorithm can be adapted in various ways. For example, the HP compressor rotational speed NH can be used to refine the calculation of W31. Typically, an engine's NGV throat capacity WRTP405 varies slightly with power level. NH is a convenient measure of power level and, therefore, can be used to adjust WRTP405 in a similar way to which SH adjusts WRTP405 in Schedule C of Figure 1. NH can also be used in subroutine F to estimate the mass flow fraction of the cooling air, in many gas turbines the cooling air being extracted at the HP compressor stage and therefore the mass flow fraction depends upon NH.

A further adaptation is to replace Schedules A-C with a calculation that determines W405 from P405, T405 and the non dimensional corrected flow Q405 = W405(T405)^{½}/P405. As the HP turbine NGVs are choked, Q405 should only be strongly affected by fluctuations in the exhaust gas composition. Thus Q405 can be obtained from a look-up table from a value of the FAR from the previous recursion period or iteration. Furthermore:
(i) P405 can be obtained by first calculating
   Q30 = W31(T30)^{½}/P30 (T30 and P30 being measured, and W31 being obtained from the previous recursion period or iteration), and then using a second look-up table of Q30 against P405/P30 to obtain a value for P405/P30 and hence P405; and
(ii) T405 can be obtained from T30 and the FAR from the previous recursion period or iteration via a third look-up table which gives values of the combustion temperature rise ΔT as a function of FAR and T30 (and preferably also as a function of SH), whence T405 = T30 + ΔT follows (this procedure for obtaining T405 is, in fact, similar to the procedure of Schedule A).
   W405 is then provided as the value of Q405.P405/(T405)^{½}.

Whether using the algorithm of Figure 1 or the adaptations discussed above, having determined the present FAR, in one embodiment the control system performs control of the fuel split ratio according to the method shown schematically in the flow diagram of Figure 2. In this embodiment, a combustor flame temperature is calculated analytically or via a look-up table as a function of FAR and T30 (and preferably also as a function of LHV, STOI and SH). The fuel split ratio is then directly determined as a function of the flame temperature via a further lookup table. Clearly, if the fuel split ratio thus-determined changes from zero to a non-zero value, then a staging event for that stage is implied.

A further embodiment is shown schematically in the flow diagram of Figure 3. In this embodiment, the combustor has pilot, mains1 and mains2 stages. The fuel split to the stages (and hence staging of the mains manifolds) is a function of predetermined maximum combustor flame temperatures. A maximum pilot fuel flow to just give a first maximum combustor flame temperature is calculated from the current combustor air entry temperature T30, air mass flow W31 determined by the algorithm and specific humidity SH (optional). This maximum allowable pilot fuel flow demand is then compared with the current total fuel flow demand through a lowest wins (LW) gate, the output of which is the pilot fuel flow demand. If the total fuel flow demand is greater than the maximum allowable pilot flow, the excess fuel flow demand is then calculated by subtracting the pilot demand from the total demand. A similar procedure to that described above is then performed for the mains1 manifold. The maximum allowable mains1 flow to just give a second maximum combustor flame temperature is calculated from T30, W31, SH (optional). A lowest wins gate then determines whether the maximum allowable mains1 demand will be exceeded. The output of the gate is the mains1 fuel flow demand. The pilot and mains1 fuel flow demands are then summed and subtracted from the total fuel flow demand. Any non-zero result from this constitutes the mains2 fuel flow demand.

The control system embodiments of Figures 2 and 3 calculate fuel splits and trigger staging events when the fuel split for a stage changes from zero to a non-zero value.

However, in other embodiments the decision to trigger a staging event may be separated from the fuel split calculation.

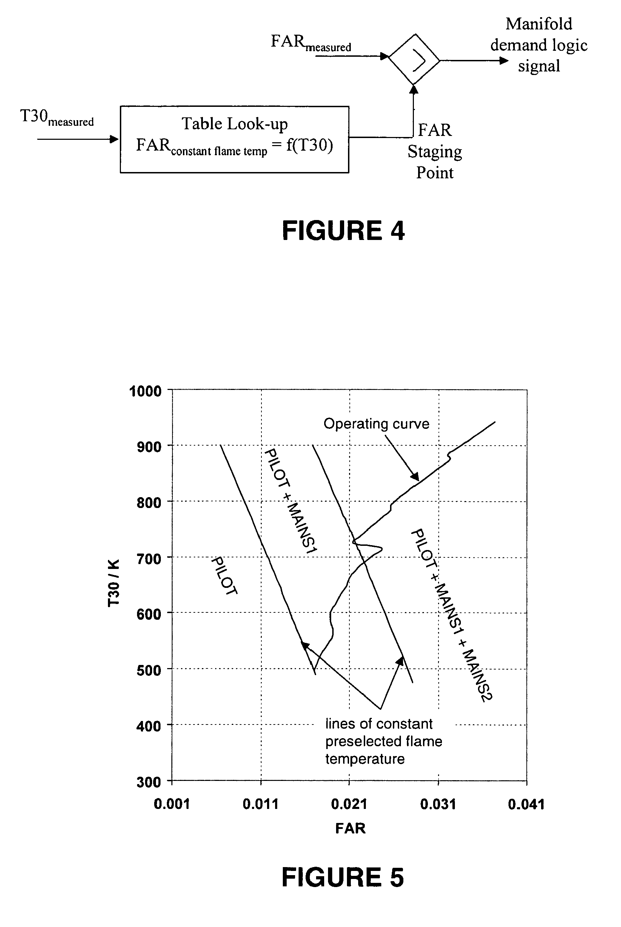

Thus, the flow diagram of Figure 4 shows schematically a procedure for determining the staging regime of a particular manifold of a combustor in a further embodiment of the control system. The combustor air entry temperature T30 is input to a look-up table. The output of the look-up table is the associated FAR value that equates to a flame temperature preselected to be the nominal staging point for the manifold in question. A logic signal is then generated to indicate burner action/inaction using an inequality relation between the look-up table's output FAR value and the current FAR value of the combustor. This process requires a look-up table and inequality function for each selectable manifold.

The positions of the lines of constant preselected flame temperature for two such manifolds is shown is shown in Figure 5, which is a graph of T30 against FAR. Also shown in Figure 5 is the operating curve which the engine follows as T30 increases under steady state conditions. When the instantaneous T30 and FAR values cause the engine to traverse one of the lines a staging event occurs. Thus, for example, the area to the left of the first staging event line, corresponds to pilot only operation; the area between the two lines corresponds to pilot + mains1; and the area to the right of the second staging event line corresponds to pilot + mains1 + mains2. However, since staging events may not occur smoothly, hysteresis can be introduced to avoid unnecessary cycling between stages. The hysteresis may be, for example, ±5% of the FAR at each line of constant preselected flame temperature.

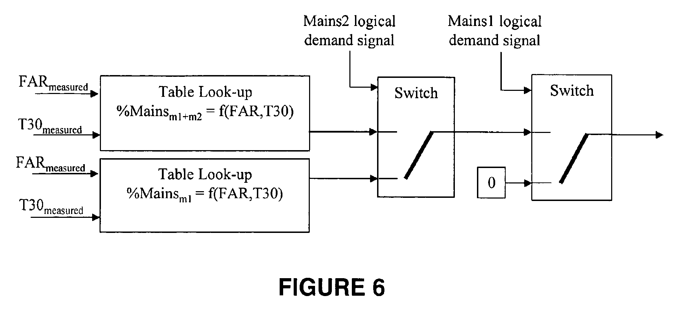

The split ratio of fuel between the active sets of burners can then be determined as a function of flame temperature. For example, the current FAR and T30 values can be input to a look-up table. The output of this look-up is the proportion of total fuel flow demand that is to form the combined mains fuel flow demand. In a particular embodiment, shown schematically in the flow diagram of Figure 6, one look-up table (lower in Figure 6) is used for the mains1 manifold and another (upper in Figure 6) for the mains 1 and mains2 manifolds. In this embodiment, although there are three manifolds (pilot, mains1 and mains2), there are only two metering valves for fuel flow: pilot and mains. The pilot metering valve only supplies the pilot manifold. The mains metering valve supplies the mains 1 manifold, which feeds a number of mains burners. The mains 2 manifold, which feeds other mains burners, is supplied through an on/off valve joining it to the mains 1 manifold. When this valve is open, fuel flow is evenly distributed between mains 1 and mains 2. When it is shut, only mains 1 is supplied. Thus the output of the upper table in Figure 6 is the percentage of the total fuel flow that is to go to the mains 1 and mains 2 manifolds, and the output of the lower table in Figure 6 is the percentage of the total fuel flow that is to go to just the mains 1 manifold. A consequence of this arrangement is that different fuel splits are possible in the hysteresis band between pilot + mains1 operation and pilot + mains1 + mains 2 operation for the same engine operating condition.

## Claims

1. A method for operating a multi-stage combustor of a gas turbine engine, the method comprising:
(a) determining a combustor air entry temperature;
(b) determining the combustor air entry flow rate; and
(c) controlling the fuel split ratio to stages of the combustor on the basis of the combustor air entry flow rate and the combustor air entry temperature.

2. A method according to claim 1, wherein, in step (b), the combustor air entry flow rate is calculated from at least the following parameters:
the combustor air entry temperature;
the compressor air delivery pressure; and
the total fuel flow rate.

3. A method according to claim 1 or 2, which further comprises the step of deriving the fuel/air ratio for the combustor on the basis of the combustor air entry flow rate,
whereby, in step (c), the fuel split ratio to stages of the combustor is controlled on the basis of the fuel/air ratio and the combustor air entry temperature.

4. A method according to claim 3, wherein step (c) comprises:
equating the fuel/air ratio and the combustor air entry temperature to a combustor flame temperature; and
controlling the fuel split ratio on the basis of the combustor flame temperature.

5. A method according to claim 4, wherein step (c) further comprises triggering a staging event when the combustor flame temperature reaches a threshold value.

6. A method according to any one of the previous claims wherein the combustor has concentric stages.

7. A computer system for operating a multi-stage combustor of a gas turbine engine, the system being configured to:
(a) receive or calculate a combustor air entry temperature;
(b) calculate the combustor air entry flow rate; and
(c) control the fuel split ratio to stages of the combustor on the basis of the combustor air entry flow rate and the combustor air entry temperature.

8. A computer program product carrying a program for operating a multi-stage combustor of a gas turbine engine, the program, when run on a suitable computer system, being configured to:
(a) receive or calculate a combustor air entry temperature;
(b) calculate the combustor air entry flow rate; and
(c) control the fuel split ratio to stages of the combustor on the basis of the combustor air entry flow rate and the combustor air entry temperature.

9. A computer program for operating a multi-stage combustor of a gas turbine engine, the program, when run on a suitable computer system, being configured to:
(a) receive or calculate a combustor air entry temperature;
(b) calculate the combustor air entry flow rate; and
(c) control the fuel split ratio to stages of the combustor on the basis of the combustor air entry flow rate and the combustor air entry temperature.

10. A gas turbine engine having a multi-stage combustor and a computer system according to claim 7 for operating the combustor.

11. A gas turbine engine according to claim 10, wherein the combustor has concentric stages.
